# EUROPÄISCHE PATENTANMELDUNG

(11) **EP 1 203 880 A2**
(43) Veröffentlichungstag der Anmeldung: **08.05.2002**
(21) Anmeldenummer: 01125963.7
(22) Anmeldetag: 31.10.2001
(51) Int. Cl.: F02M 35/12

(54) **Ansaugeinrichtung für eine Brennkraftmaschine**

(30) Priorität: 01.11.2000 DE 10054014
(71) Anmelder: ROBERT BOSCH GMBH, 70442 Stuttgart (DE)
(72) Erfinder: Hundhausen, Manfred, 74321 Bietigheim-Bissingen (DE)

(57) **Zusammenfassung**

Eine Ansaugeinrichtung für eine Brennkraftmaschine mit einer Verdichtungseinrichtung (20), insbesondere einem Turbolader, wobei eine um die Verdichtungseinrichtung (20) herumführende Bypassleitung (50) vorgesehen ist, in welcher ein Ventil (60) zum Öffnen und Schließen der Bypassleitung (50) angeordnet ist, ist dadurch gekennzeichnet, dass in der Bypassleitung (50) und/oder in dem Ventil (60) ein Akustikelement (70) angeordnet ist.

## Beschreibung

### Stand der Technik

Die Erfindung betrifft eine Ansaugeinrichtung für eine Brennkraftmaschine mit einer Verdichtungseinrichtung nach der Gattung des Anspruchs 1.

Eine solche Ansaugeinrichtung geht beispielsweise aus der DE 196 37 055 A1 hervor. Bei Brennkraftmaschinen mit insbesondere mechanischen Verdichtungseinrichtungen kommt es beim Übergang vom Aufladebetrieb mit der Verdichtungseinrichtung in den Schubbetrieb ohne Betrieb der Verdichtungseinrichtung zu einem sogenannten Nachlaufen der Verdichtungseinrichtung. Dabei wird bei bereits geschlossener Drosselklappe weiterhin Luft von der Verdichtungseinrichtung gefördert, die auf die Drosselklappe prallt und zurückströmt. Dies kann zu einer Zerstörung der Verdichtungseinrichtung führen.

Um dies zu verhindern, sind bei bekannten Ansaugeinrichtungen für eine Brennkraftmaschine mit Verdichtungseinrichtungen, insbesondere mit Turboladern, Bypassleitungen vorgesehen, die um die Verdichtungseinrichtungen herumführen. In diesen Bypassleitungen ist ein Ventil zum Öffnen und Schliessen der Bypassleitung angeordnet. Derartige Ventile ermöglichen den Abbau des Ladedrucks beim Schliessen der Drosselklappe. Hierdurch wird insbesondere die Verdichtungseinrichtung, d.h. beispielsweise der Turbolader vor einer Drucküberhöhung geschützt und Strömungsabrisse sowie Druckpulsationen verhindert, die von der Verdichtungseinrichtung, insbesondere von der Turbine eines Turboladers ausgehen.

Eine solche Ansaugeinrichtung ist ferner aus der DE 38 04 013 A1 bekannt.

Problematisch bei einer derartigen Ansaugeinrichtung sind nun Geräusche, die insbesondere beim langsamen Beschleunigen eines Fahrzeugs auftreten. Durch eine elektrische Ansteuerung des Ventils können rein prinzipiell derartige störende Geräusche vermieden werden, indem das Ventil länger offengehalten wird. In diesem Falle ergeben sich jedoch bei einem Schaltvorgang des Ventils von der geöffneten in die geschlossene Stellung Fahrverhaltensprobleme, die sich in einem spürbaren Ruck des Fahrzeugs äußern.

Der Erfindung liegt daher die Aufgabe zugrunde, eine Ansaugeinrichtung für eine Brennkraftmaschine mit einer Verdichtungseinrichtung dahingehend weiterzubilden, dass bei einer Ansteuerung des Ventils weder störende Geräusch noch ein unerwünschtes Fahrverhalten des Fahrzeugs entstehen. Die Weiterbildung soll dabei mit möglichst wenig Bauteilen erfolgen, so dass nur wenig zusätzliche Kosten für die Herstellung und Montage entstehen.

### Vorteile der Erfindung

Die erfindungsgemäße Ansaugeinrichtung für eine Brennkraftmaschine mit einer Verdichtungseinrichtung mit den kennzeichnenden Merkmalen des Anspruchs 1 hat demgegenüber den Vorteil, dass durch das Akustikelement störende Geräusche beseitigt werden, ohne dass unerwünschte Eigenschaften des Fahrverhaltens bei einer externen Ansteuerung des Ventils auftreten.

Durch Wegfall der elektrischen Ansteuerung entfallen insbesondere auch die oben beschriebenen nachteiligen "Schaltrucke". Öffnungs- und Schließvorgänge gehen vielmehr kontinuierlich vonstatten.

Durch das Akustikelement werden unerwünschte Resonanzen in der Ansaugeinrichtung komplett verhindert.

Bei einer vorteilhaften Ausführungsform ist das Akustikelement in der Zuleitung des Ventils angeordnet.

Das Akustikelement selbst kann auf die unterschiedlichste Art und Weise ausgebildet sein, es muss lediglich so ausgebildet sein, dass es Resonanzen in der Ansaugeinrichtung verhindert.

Eine vorteilhafte Ausführungsform sieht vor, dass das Akustikelement ein im Winkel zur Zuleitung angeordneter, einseitig verschlossener Resonanz-Hohlraum ist.

Dieser Resonanz-Hohlraum ist vorzugsweise hinsichtlich wenigstens einer der folgenden Parameter veränderbar und auf eine Einbausituation anpassbar:
- Geometrische Anordnung in der Zuleitung, insbesondere Winkel zwischen der Zuleitung und dem Resonanz-Hohlraum,
- Gestalt des Resonanz-Hohlraums.

Eine besonders vorteilhafte, da sehr einfach zu realisierende und insbesondere kostengünstig herzustellende und leicht zu montierende Ausführungsform sieht vor, dass der Resonanz-Hohlraum ein Schlauchstück ist, dass im Winkel zur Zuleitung angeordnet ist.

Das einseitig verschlossene Schlauchstück kann hinsichtlich der Schlauchlänge, der Schlauchbeschaffenheit, der Elastizität des Schlauches sowie des SchLauchinnendurchmessers veränderbar und auf eine Einbausituation anpassbar sein. Durch diese Parameter sind die akustischen Eigenschaften des einseitig verschlossenen Schlauchstücks in großem Umfang veränderbar und auf eine konkrete Einbausituation anpassbar.

Das Schlauchstück ist vorteilhafter Weise durch ein T-Stück in die Zuleitung integriert. Eine solche Lösung ermöglicht auch die Nachrüstung bestehender Ansaugeinrichtungen von Kraftfahrzeugen.

### Zeichnung

Ausführungsbeispiele der Erfindung sind in der Zeichnung vereinfacht dargestellt und in der nachfolgenden Beschreibung näher erläutert. Es zeigen
Figur 1 in schematisch vereinfachter Darstellungsweise ein erstes Ausführungsbeispiel einer Ansaugeinrichtung für eine Brennkraftmaschine mit Turbolader und
Figur 2 in schematisch vereinfachter Darstellungsweise ein zweites Ausführungsbeispiel einer Ansaugeinrichtung für eine Brennkraftmaschine mit Turbolader.

### Beschreibung der Ausführungsbeispiele

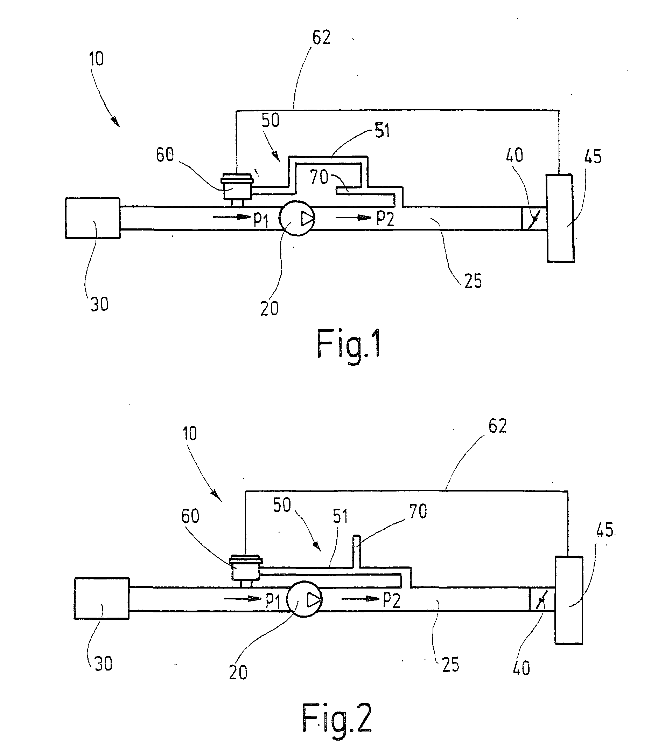

In Figur 1 ist in schematisch vereinfachter Darstellung eine Ansaugeinrichtung 10 für eine Brennkraftmaschine mit einer Verdichtungseinrichtung 20, die in einem Ansaugrohr 25 angeordnet ist, dargestellt. Die Verdichtungseinrichtung 20 ist zwischen einem Luftmassenmesser 30 und einer Drosselklappe 40, die vor einem Saugrohr 45 einer (nicht dargestellt) Brennkraftmaschine angeordnet ist, vorgesehen. Die Verdichtungseinrichtung 20 kann beispielsweise wie in Figur 1 dargestellt, ein Abgasturbolader sein.

Parallel zu dem Abgasturbolader stromaufwärts der Drosselklappe 40 ist eine Bypassleitung 50 vorgesehen, in der ein Schubumluftventil 60 angeordnet ist. Das Schubumluftventil 60 wird über eine Steuerleitung 62 angesteuert. Es öffnet beim Übergang vom Aufladebetrieb mit Betrieb des Abgasturboladers in den ohne Betrieb des Abgasturboladers vorgesehenen Schubbetrieb der Brennkraftmaschine. Hierdurch wird verhindert, dass durch ein Nachlaufen des Abgasturboladers die von diesem geförderte Luft auf die Drosselklappe 40 aufprallt und diese hierdurch eventuell beschädigt.

Um unerwünschte Geräusche, die beim Öffnen des Ventils 60 entstehen, zu verhindern, ist in der Bypassleitung 50 ein Akustikelement in Form eines einseitig verschlossenen Schlauchstücks 70 im Winkel zu einer Zuleitung 51 des Ventils 60 angeordnet. Dieses Schlauchstück 70 kann beispielsweise mit einem T-Stück in die Zuleitung 51 integriert sein. Das Schlauchstück 70 kann dabei hinsichtlich der Schlauchlänge, der Schlauchbeschaffenheit, der Elastizität des Schlauches, des Schlauchinnendurchmessers verändert und auf eine konkrete Einbausituation angepaßt werden.

In einem in Figur 2 dargestellten zweiten Ausführungsbeispiel sind diejenigen Elemente, die mit denen des ersten, in Figur 1 dargestellten Ausführungsbeispiels identisch sind, mit denselben Bezugszeichen versehen, so dass bezüglich deren Beschreibung auf die Ausführungen zum ersten Ausführungsbeispiel voll inhaltlich Bezug genommen wird. Wie aus Fig. 2 ersichtlich ist, kann das Schlauchstück verschiedene Anordnungen, Längen und dergleichen aufweisen und mit verschiedenen Anschlußwinkeln in die Zuleitung 51 integriert werden. Es kann beispielsweise so eingebaut werden, dass in der Zuleitung 51 mehrere Luftumlenkungen erforderlich sind. Es kann aber auch so integriert sein, dass es lediglich von der ansonsten linear verlaufenden Zuleitung 51 absteht.

Es versteht sich, dass der Winkel zwischen dem Schlauchstück 70 und der Zuleitung kein rechter Winkel sein muß. Es sind auch vom rechten Winkel abweichende Winkel denkbar. Die Wahl der Schlauchlänge, der Schlauchbeschaffenheit, der Elastizität des Schlauches, des Schlauchinnendurchmessers, der Gestalt des Schlauches und damit der Gestalt des Resonanz-Hohlraums und des Winkels, den die Anordnung des Resonanz-Hohlraums mit der Zuleitung einschließt, werden vorteilhafterweise empirisch ermittelt und auf eine konkrete Einbausituation angepaßt. Hierzu sind lediglich einfach durchzuführende akustische Messungen erforderlich.

Statt der Anordnung eines Schlauchstücks in der Zuleitung 51 kann darüber hinaus vorgesehen sein, dass ein Resonanzvolumen direkt in das Ventil integriert ist (nicht dargestellt). In diesem Falle kann dann das zusätzliche Resonanzvolumen in Form des Schlauches wegfallen.

## Patentansprüche

1. Ansaugeinrichtung für eine Brennkraftmaschine mit einer Verdichtungseinrichtung (20), insbesondere einem Turbolader, wobei eine um die Verdichtungseinrichtung (20) herumführende Bypassleitung (50) vorgesehen ist, in welcher ein Ventil (60) zum Öffnen und Schließen der Bypassleitung (50) angeordnet ist, **dadurch gekennzeichnet, dass** in der Bypassleitung (50) und/oder in dem Ventil (60) ein Akustikelement (70) angeordnet ist.

2. Ansaugeinrichtung nach Anspruch 1, **dadurch gekennzeichnet, dass** das Akustikelement (70) in einer Zuleitung (51) des Ventils (60) angeordnet ist.

3. Ansaugeinrichtung nach Anspruch 2, **dadurch gekennzeichnet, dass** das Akustikelement (70) ein im Winkel zur Zuleitung (51) angeordneter einseitig verschlossener Resonanz-Hohlraum ist.

4. Ansaugeinrichtung nach Anspruch 3, **dadurch gekennzeichnet, dass** der Resonanz-Hohlraum hinsichtlich wenigstens einer der folgenden Parameter veränderbar und auf eine Einbausituation anpassbar ist:
- geometrische Anordnung in der Zuleitung (51), insbesondere Winkel zwischen der Zuleitung und (51) und dem Resonanz-Hohlraum,
- Gestalt des Resonanz-Hohlraums,
- Form des Resonanz-Hohlraums.

5. Ansaugeinrichtung nach einem der Ansprüche 3 oder 4, **dadurch gekennzeichnet, dass** der Resonanz-Hohlraum ein Schlauchstück ist, das im Winkel zur Zuleitung angeordnet ist.

6. Ansaugeinrichtung nach Anspruch 5, **dadurch gekennzeichnet, dass** das einseitig verschlossene Schlauchstück hinsichtich wenigstens einer der folgenden Parameter veränderbar und auf eine Einbausituation anpassbar ist:
Schlauchlänge,
Schlauchbeschaffenheit,
Elastizität des Schlauches,
Schlauchinnendurchmesser.

7. Ansaugeinrichtung nach Anspruch 5 oder 6, **dadurch gekennzeichnet, dass** das Schlauchstück mittels eines T-Stückes in die Zuleitung integriert ist.
